# EUROPÄISCHE PATENTSCHRIFT

(11) **EP 4 043 122 B1**
(45) Veröffentlichungstag und Bekanntmachung des Hinweises auf die Patenterteilung: **03.04.2024**
(21) Anmeldenummer: 21156644.3
(22) Anmeldetag: 11.02.2021
(51) Int. Cl.: B22D 17/22, B22D 17/26, B29C 45/17

(54) **DRUCKGUSSMASCHINE MIT VERBESSERTER AUFSPANNPLATTE**
DIE CASTING MACHINE WITH IMPROVED CLAMPING PLATE
MACHINE DE COULÉE SOUS PRESSION POURVU DE PLAQUE DE SERRAGE AMÉLIORÉE

(43) Veröffentlichungstag der Anmeldung: 17.08.2022
(73) Patentinhaber: Bühler AG, 9240 Uzwil (CH)
(72) Erfinder: Schläpfer, Elias, 8582 Dozwil (CH); Walker, Raphael, 8400 Winterthur (CH)
(74) Vertreter: Hepp Wenger Ryffel AG

(56) Entgegenhaltungen:
- JP-A- 2005 144 802
- JP-A- 2013 244 740
- US-A1- 2008 175 938
- US-A1- 2016 031 139
- Bühler Group: "Bühler Die Casting extends Carat portfolio", , 21 December 2020 (2020-12-21), XP093030867, Retrieved from the Internet: URL:https://www.youtube.com/watch?v=j10DRY e5Zfk [retrieved on 2023-03-10]

## Beschreibung

Die vorliegende Erfindung betrifft eine Aufspannplatte für eine Druckgussmaschine, sowie eine Druckgussmaschine mit einer entsprechenden Aufspannplatte.

In den letzten Jahren hat es insbesondere im Automobilbereich einen Trend zu Strukturbauteilen zunehmender Grösse gegeben. Zudem werden zunehmende Strukturbauteile für 5G-Antennen und Batteriegehäuse für elektrisch betriebene Fahrzeuge benötigt.

Derartige Strukturbauteilen werden im Druckgussverfahren hergestellt. Das Druckgussverfahren und die hierfür benötigen Druckgussmaschinen sind hinlänglich bekannt (vgl. z.B. Brunhuber, Praxis der Druckgussfertigung, Berlin, 3. Aufl. 1980).

Aufgrund des vorstehend beschriebenen zunehmenden Bedarfs an Strukturbauteilen gibt es einen Bedarf an grösser dimensionierten Druckgussmaschinen mit erhöhter Schliesskraft, vorzugsweise von mehr als 45000 kN. Das bedingt auch eine entsprechende Vergrösserung der Dimensionen der Aufspannplatten, damit diese den wirkenden hohen Kräften ohne Deformation standhalten können.

Die Herstellung von Aufspannplatten wird mit zunehmenden Dimensionen zeit- und kostenaufwendiger. Zudem kommt es zu einer signifikanten Gewichtserhöhung der Druckgiessmaschine. Weiterhin besteht bei der festen Aufspannplatte ein Problem, dass die in der Platte notwendigerweise vorhandene Giessöffnung schlechter zugänglich wird, wenn man die Dicke und Kompaktheit der festen Aufspannplatte erhöht.

Es gab bereits Überlegungen im Stand der Technik, das Gewicht von Aufspannplatten zu reduzieren, indem man die Aufspannplatten weniger kompakt gestaltet. Dieses Konzept wurde vor allem für Spritzgussmaschinen vorgeschlagen, da im Spritzgussverfahren weniger grosse Kräfte auf die Aufspannplatten wirken als im Druckgussverfahren und entsprechend die Aufspannplatten weniger robust sein müssen.

In der US-2007/0235898 A1 ist ein Giessplattensystem aus zwei separaten Platten beschrieben, bei welchem eine vordere Platte in seinem mittleren Abschnitt über ein beispielsweise konisches Bauteil mit einer hinteren Platte verbunden ist. Zur Vermeidung von Deformationen sind zusätzliche Streben vorgesehen, welche die jeweiligen Ecken der vorderen und hinteren Platte verbinden. In der EP-3 597 391 A1 ist ein analoges Giessplattensystem aus zwei separaten Platten beschrieben, bei welchem eine vordere Platte an seinen Ecken über Kupplungsabschnitte zum Ankuppeln von Führungssäulen mit einer hinteren Platte verbunden ist. Zentriert ist eine zylindrische Rippe zur Verbindung der beiden Platten vorgesehen. Verstärkungsstreben verlaufen von der zylindrischen Rippe diagonal zu den Kupplungsabschnitten und vertikal nach oben und unten.

In der US-2011/0200701 A1 ist eine bewegliche Aufspannplatte für eine Spitzgussmaschine beschrieben, bei welcher die an den Ecken auf der Rückseite der Platte angeordneten Hülsen für die Führungssäulen zur Versteifung durch Wände verbunden sind. Dadurch wird ein Innenraum auf der Rückseite und ausserhalb der Platte gebildet, um Platz für einen Ausstosszylinder zu schaffen.

Die vorstehend beschriebenen Systeme sind für grosse Druckgiessmaschinen mit den dort auftretenden enormen Schliesskräften von mehr als 45000 kN ungeeignet. Eine solche grosse Druckgiessmaschine mit einem rechteckförmigen Hohlraum wird beschrieben in: Bühler Group: "Bühler Die Casting extends Carat portfolio", 21. Dezember 2020 (2020-12-21); Gefunden im Internet: URL:https://www.youtube.com/watch? v=jl0DRYe5Zfk [gefunden am 2023-03-10].

Es war die Aufgabe der vorliegenden Erfindung, eine Druckgussmaschine mit mindestens einer Aufspannplatte bereitzustellen, welche ein geringeres Gewicht aufweist als herkömmliche Aufspannplatten, aber dennoch in grösseren Druckgussmaschinen über lange Zeit eingesetzt werden kann und im Fall einer festen Aufspannplatte einen erleichterten Zugang zur Giessöffnung ermöglicht.

Die vorstehende Aufgabe wird durch die in den Ansprüchen definierte Aufspannplatte und Druckgiessmaschine gelöst.

Im Detail betrifft die vorliegende Erfindung eine Aufspannplatte, insbesondere feste Aufspannplatte, für eine Druckgiessmaschine, umfassend
- eine erste Seite und eine zweite Seite, wobei an der ersten Seite eine Giessform angeordnet werden kann,
- Aufnahmeöffnungen für Führungssäulen, welche in den Ecken der Aufspannplatte angeordnet sind,
dadurch gekennzeichnet, dass die Aufspannplatte einen kalottenförmigen Hohlraum aufweist, dessen Basis sich in der zweiten Seite der Aufspannplatte befindet und offen ist und welcher sich zum Flächenschwerpunkt der Aufnahmeöffnungen auf der ersten Seite hin verjüngt.

Druckgiessmaschinen sind hinlänglich bekannt und müssen hier nicht im Detail beschrieben werden. Mit diesen Maschinen können Formteile in einer Giessform hergestellt werden, wobei die Giessform üblicherweise aus zwei Giessformhälften besteht, welche zusammen die äusseren Konturen des herzustellenden Formteils vorgeben. Jeweils ein Giessformteil, üblicherweise eine Giessformhälfte, befindet sich auf einer festen Aufspannplatte und einer beweglichen Aufspannplatte.

Druckgiessmaschinen werden zur Herstellung von metallischen Gussteilen wie beispielsweise Motorblöcken eingesetzt. Erfindungsgemäss bevorzugt handelt es sich bei der Druckgiessmaschine um eine Zwei-Platten-Druckgiessmaschine oder um eine Drei-Platten-Druckgiessmaschine, vorzugsweise um eine Zwei-Platten-Druckgiessmaschine. Diese Arten von Druckgiessmaschinen sind hinlänglich bekannt. Die Anmelderin stellt unter anderem Zwei-Platten-Druckgiessmaschinen unter dem Handelsnamen KARAT^{®} her.

Beispielhaft ist in der WO 2008/131571 A1 eine horizontale Zwei-platten-Druckgiessmaschine beschrieben. Diese Zweiplatten-Druckgiessmaschine umfasst eine bewegliche Aufspannplatte (BAP) und eine feste Aufspannplatte (FAP), an denen jeweils eine Giessformhälfte angeordnet ist. Durch Bewegung der beweglichen Aufspannplatte mittels Kraftübertragungsmitteln auf einem Maschinenbett kann die Druckgiessform geöffnet und geschlossen werden. In geschlossener Stellung (Schliessposition) werden die beiden Aufspannplatten fest aneinander gepresst, so dass die beiden Giessformhälften eine geschlossene hohle Form bilden. In die geschlossene Form wird eine Metallschmelze unter Druck eingeführt und unter Erstarrung abgekühlt. Das erstarrte Gussteil kann nach Öffnen der Form (durch Bewegung der beweglichen Aufspannplatte) entnommen werden. Die Bewegung der beweglichen Aufspannplatte erfolgt bei der Maschine gemäss der WO 2008/131571 A1 über Führungssäulen, vorzugsweise 4 Führungssäulen.

Erfindungsgemäss wird unter Schliessposition die maximale Position der beweglichen Aufspannplatte verstanden, welche die bewegliche Aufspannplatte bei einer Bewegung in Richtung der festen Aufspannplatte einnehmen kann, bevor ihre weitere Bewegung durch die feste Aufspannplatte verhindert wird. Erfindungsgemäss wird unter Schliessrichtung eine Bewegung der beweglichen Aufspannplatte in Richtung der festen Aufspannplatte verstanden. Erfindungsgemäss wird unter Öffnungsrichtung eine Bewegung der beweglichen Aufspannplatte in Richtung von der festen Aufspannplatte weg verstanden. Erfindungsgemäss wird unter Öffnungsposition die maximale Position der beweglichen Aufspannplatte verstanden, welche die bewegliche Aufspannplatte bei einer Bewegung in Richtung von der festen Aufspannplatte weg konstruktionsbedingt einnehmen kann.

In die gebildete hohle (Giess-)Form (auch als Kavität oder Formkontur bezeichnet) kann Material zur Herstellung des gewünschten Formkörpers eingeführt werden. Im Druckgussverfahren handelt es sich hierbei um geschmolzene Metalle, beispielsweise Aluminium oder geschmolzene Metall-Legierungen, die unter Druck mit Hilfe eines Giesszylinders einer Giesseinheit durch eine in der festen Aufspannplatte vorgesehene Giessöffnung in die Form gepresst werden. Um eine Öffnung der Form unter diesen belastenden Bedingungen zu vermeiden, wird die bewegliche Aufspannplatte mit Hilfe eines Schliesszylinders und von an den Führungssäulen befestigten Spannzylindern in ihrer Schliessposition gehalten. Nach Erstarren des Materials in der Form wird die Form durch Bewegen der beweglichen Aufspannplatte in Öffnungsrichtung geöffnet und das fertige Formteil kann entnommen werden. Beispielsweise kann das fertige gegossene Bauteil mit Hilfe von Auswerfern ausgeworfen werden.

Man unterscheidet zwischen einer Kaltkammer- und einer Warmkammer-Druckgussmaschine. Bei einer Warmkammer-Druckgussmaschine wird der Giessbehälter einer Giesseinheit in einem Tiegel mit geschmolzenem Metall gehalten. Ein Giesskolben bewegt sich in den Giessbehälter hinein und presst die Metallschmelze durch eine ebenfalls zumindest teilweise in dem Tiegel angeordneten Giessbehälter und eine in der festen Aufspannplatte vorgesehene Giessöffnung in die Giessform. Giessbehälter und Giesskolben sind bei diesem Verfahren dauerhaft der Metallschmelze ausgesetzt. Das Giessaggregat einer Warmkammer-Druckgussmaschine ist grundsätzlich anders konstruiert als das einer Kaltkammer-Druckgussmaschine. Bei einer Kaltkammer-Druckgussmaschine wird das Metall in einer separaten Vorrichtung geschmolzen beziehungsweise in geschmolzenem Zustand warm gehalten. Die zur Herstellung des gewünschten Bauteils erforderliche Menge an Metallschmelze wird über eine Einfüllöffnung in eine kalte Giesskammer einer Giesseinheit eingefüllt und mit Hilfe eines in der Giesskammer beweglich angeordneten Giesskolbens durch eine in der festen Aufspannplatte vorgesehene Giessöffnung in die Giessform gepresst.

Kaltkammer- und Warmkammer-Druckgussmaschinen sind dem Fachmann hinlänglich bekannt.

Bei einer herkömmlichen Druckgiessmaschine wird die bewegliche Aufspannplatte über 4 (vier) Führungssäulen geführt, welche an den Ecken der festen Aufspannplatte lösbar angeordnet sind und durch Aufnahmeöffnungen in den Ecken der beweglichen Aufspannplatte geführt sind. Um für einen allfälligen Austausch der Giessform ausreichenden Zugang zu dem Bereich zwischen fester und beweglicher Aufspannplatte zu erhalten, sind vorzugsweise zumindest die beiden oberen Führungssäulen aus der festen Aufspannplatte herausziehbar angeordnet. Säulenauszugsvorrichtungen sind bekannt und müssen hier nicht weiter erläutert werden. Beispielhaft wird auf Säulenauszugsvorrichtungen verweisen, wie sie in der WO 2008/131571 A1 oder der EP-2 792 465 A1 beschrieben sind.

Die Führungssäulen sind mit der festen Aufspannplatte lösbar verbunden. Die hierfür erforderliche Befestigungsvorrichtung zur lösbaren Verbindung mit einer Führungssäule kann erfindungsgemäss auf bekannte Weise durch geeignete Kupplungsverbindungen erfolgen, wie sie im Stand der Technik beschrieben sind. Beispielhaft sei eine zweiteilige Mutter genannt, d.h. eine Mutter mit zwei separaten Hälften, die von der Säule weg oder zu dieser hin bewegt werden können, beispielsweise durch einen hydraulischen Antrieb. Um die Führungssäule in der festen Aufspannplatte zu fixieren, werden die beiden Hälften der Mutter zusammengepresst, wodurch sich eine formschlüssige Verbindung zwischen der so gebildeten Mutter und der Führungssäule ausbildet. Vorzugsweise ist die Befestigungsvorrichtung zur lösbaren Verbindung mit einer Führungssäule an einer Ecke der festen Aufspannplatte auf der von der beweglichen Aufspannplatte abgewandten Seite angeordnet. Besonders bevorzugt ist in jeder Ecke der festen Aufspannplatte auf der von der beweglichen Aufspannplatte abgewandten Seite eine derartige Befestigungsvorrichtung zur lösbaren Verbindung mit einer Führungssäule angeordnet.

Während des normalen Formbetriebs der erfindungsgemässen Druckgiessmaschine (Formmaschine) sind die Führungssäulen durch die vorstehend beschriebene Befestigungsvorrichtung zur lösbaren Verbindung mit einer Führungssäule fest mit der festen Aufspannplatte verbunden. Nur während eines allfälligen Säulenziehens zum Auswechseln der Giessform wird diese Verbindung gelöst.

An der beweglichen Aufspannplatte der erfindungsgemässen Druckgiessmaschine kann, vorzugsweise an einer Ecke auf der von der festen Aufspannplatte abgewandten Seite, als Bestandteil einer Säulenauszugvorrichtung eine nachstehend im Detail beschriebene weitere Befestigungsvorrichtung zur lösbaren Verbindung mit einer Führungssäule angeordnet sein. Da wie vorstehend ausgeführt im Fall einer Druckgiessmaschine, mit vier Führungssäulen die beiden oberen Führungssäulen zum Auswechseln der Form aus dem Bereich zwischen fester und beweglicher Aufspannplatte herausgezogen werden sollen, sind vorzugsweise zumindest an den beiden oberen Ecken der beweglichen Aufspannplatte derartige Befestigungsvorrichtungen zur lösbaren Verbindung mit einer Führungssäule angeordnet. Es ist aber selbstverständlich möglich, an allen Ecken der beweglichen Aufspannplatte auf der von der festen Aufspannplatte abgewandten Seite derartige Befestigungsvorrichtungen zur lösbaren Verbindung mit einer Führungssäule bereitzustellen, um ein Herausziehen sämtlicher Führungssäulen aus der Druckgiessmaschine zu ermöglichen.

Die an der beweglichen Aufspannplatte angeordnete Befestigungsvorrichtung zur lösbaren Verbindung mit einer Führungssäule der Säulenauszugvorrichtung kann auf aus dem Stand der Technik bekannte Art und Weise realisiert werden. Bevorzugt ist eine Kupplung, mit welcher wahlweise eine formschlüssige oder kraftschlüssige Verbindung mit der Führungssäule hergestellt werden kann.

Herkömmlicherweise bei Druckgiessmaschinen eingesetzte Führungssäulen weisen in dem Abschnitt, in welchem sie bei normalem Formbetrieb der Maschine in Kontakt mit der beweglichen Aufspannplatte kommen, Rillen auf. Diese Rillen dienen dazu, eine möglichst feste Verbindung zwischen beweglicher Aufspannplatte und Führungssäule herzustellen. Insbesondere während des Giessbetriebs einer Druckgiessmaschine treten wie vorstehend beschrieben enorme Belastungen auf, unter denen die Form zuverlässig geschlossen gehalten werden muss. Hierzu wird durch die an der beweglichen Aufspannplatte angeordnete Befestigungsvorrichtung eine formschlüssige Kupplung mit der Führungssäule hergestellt. Vorzugsweise wird hierfür eine zweiteilige Mutter verwendet, d.h. eine Mutter mit zwei separaten Hälften, die von der Führungssäule weg oder zu dieser hin bewegt werden können, beispielsweise durch einen hydraulischen Antrieb. Die mit der Führungssäule in Kontakt tretenden Innenflächen der Mutterhälften weisen Rillen auf, welche formschlüssig in Kontakt mit den Rillen auf der Säulenoberfläche in Wechselwirkung treten können. Mit anderen Worten kann eine formschlüssige Verbindung erzeugt werden, indem eine Erhebung zwischen zwei Rillen auf der Innenfläche der Mutterhälften in eine Rille auf der Säulenoberfläche eingreift, und umgekehrt. Um die Führungssäule in der beweglichen Aufspannplatte zu fixieren, werden die beiden Hälften der Mutter zusammengepresst, wodurch sich die vorstehend beschriebene formschlüssige Verbindung zwischen der so gebildeten Mutter und der Führungssäule ausbildet. Selbstverständlich kann die formschlüssige Verbindung zwischen Führungssäule und beweglicher Aufspannplatte auch auf andere bekannte Weise realisiert werden als durch die vorstehend beschrieben Rillen. Die vorstehend beschrieben Ausführungsform ist jedoch erfindungsgemäss bevorzugt.

Während des normalen Formbetriebs der erfindungsgemässen Druckgiessmaschine wird die bewegliche Aufspannplatte auf den Führungssäulen bewegt, indem die vorstehend beschriebene formschlüssige Kupplung gelöst wird, wodurch die bewegliche Aufspannplatte mit Hilfe eines herkömmlichen Antriebs auf einem Maschinenrahmen in Schliessrichtung oder Öffnungsrichtung bewegt werden kann. Um die bewegliche Aufspannplatte in einer gewünschten Position zu fixieren, wird die vorstehend beschrieben formschlüssige Kupplung mit der Führungssäule hergestellt.

Wie vorstehend ausgeführt ist es für die Herstellung grosser Gussteile erforderlich, während des Giessvorgangs eine hohe Schliesskraft bereitzustellen. Dies bedingt eine entsprechende Vergrösserung der Dimensionen der Druckgiessmaschine, insbesondere der Aufspannplatten. Die Herstellung von derart grossen Aufspannplatten ist jedoch zeit- und kostenaufwendig. Eine für eine Druckgiessmaschine mit einer Schliesskraft von mehr als 45000 kN erforderliche bewegliche Aufspannplatte weist ein Gewicht von etwa 100 t auf und benötigt zur Herstellung einen Zeitbedarf von etwa 10 Wochen. Die Aufspannplatten sind entsprechend dick, was die Zugänglichkeit der in der festen Aufspannplatte vorhandenen Giessöffnung erschwert. Üblicherweise ist in der beweglichen Aufspannplatte ebenfalls zumindest eine Öffnung vorgesehen, durch welche eine Ausstosseinheit geführt werden kann, um ein in der Giessform befindliches Giessteil auszustossen. Die Zugänglichkeit dieser Öffnung in der beweglichen Aufspannplatte wird durch die für hohe Schliesskräfte erforderlichen Dimensionen dieser Aufspannplatte ebenfalls erschwert.

Die vorliegende Erfindung löst die damit verbundenen Probleme, indem das Gewicht der Aufspannplatten der erfindungsgemässen Druckgiessmaschine so weit wie möglich reduziert wird.

Erfindungsgemäss wird dies dadurch erreicht, dass die Aufspannplatte einen kalottenförmigen Hohlraum aufweist, dessen Basis sich in der zweiten Seite (d.h. der von der Giessform abgewandten Seite) der Aufspannplatte befindet und offen ist und welcher sich zum Flächenschwerpunkt der Aufnahmeöffnungen auf der ersten Seite hin verjüngt.

Unter einem Flächenschwerpunkt (auch als geometrischer Schwerpunkt bezeichnet) einer Figur wird ein besonders ausgezeichneter Punkt verstanden, den man als eine Art Mittelpunkt interpretiert. Mathematisch entspricht dies der Mittelung aller Punkte innerhalb der Figur.

Erfindungsgemäss hat die erste Seite der Aufspannplatte eine im Wesentlichen quadratische Form. In den Ecken der ersten Seite sind die Aufnahmeöffnungen für die Führungssäulen angeordnet.

Den Flächenschwerpunkt auf der ersten Seite der Aufspannplatte kann man auf bekannte Art und Weise bestimmen, indem man die Symmetrieachsen zwischen den Aufnahmeöffnungen einzeichnet. In dem Schnittpunkt der Symmetrieachsen befindet sich der Flächenschwerpunkt.

Erfindungsgemäss wird unter "kalottenförmig" eine kuppelartige Form verstanden. Eine derartige Form kann durch einen Schnitt eines Kugelkörpers entlang einer durch den Körper gelegten Ebene gebildet werden (sogenannte Kugelkalotte). Erfindungsgemäss bevorzugt ist eine kalottenförmige Form eine Zwischenform zwischen einer Kugelkalotte und einem Konus (einem Kegel oder Kegelstumpf). Mit anderen Worten weist der kalottenförmige Hohlraum vorzugsweise einen abgeflachten Spitzenabschnitt auf, in dessen Zentrum sich der vorstehend beschriebene Flächenschwerpunkt der Aufnahmeöffnungen befindet.

Die Basis des kalottenförmigen Hohlraums befindet sich in der zweiten Seite (d.h. der von der Giessform abgewandten Seite) der Aufspannplatte und ist offen. Dadurch wird eine ausgezeichnete Zugänglichkeit des Hohlraums erreicht, insbesondere einer sich im Spitzenabschnitt des Hohlraums befindlichen Öffnung wie einer Giessöffnung (im Fall einer festen Aufspannplatte) oder zumindest einer Öffnung für eine Ausstosseinheit (im Fall einer beweglichen Aufspannplatte).

Vorzugsweise ist die offene Basis des kalottenförmigen Hohlraums quadratisch oder rechteckig und umfasst eine Fläche im Bereich von 30% bis 70%, bevorzugter 33% bis 65%, besonders bevorzugt 40% bis 60% der Gesamtfläche der zweiten Seite der Aufspannplatte.

Erfindungsgemäss bevorzugt beträgt der Abstand vom Zentrum einer Aufnahmeöffnung zur nächstgelegenen vertikalen Innenseite des kalottenförmigen Hohlraums 5-30% des Abstands zwischen einer durch den Flächenschwerpunkt der Aufnahmeöffnungen verlaufende Mittellinie und dem Zentrum der Aufnahmeöffnung.

Wie vorstehend beschrieben verjüngt sich der kalottenförmigen Hohlraums von seiner Basis in der zweiten Seite der Aufspannplatte zum Flächenschwerpunkt der Aufnahmeöffnungen auf der ersten Seite hin. Um einen optimalen Kraftfluss durch die Aufspannplatte von den Befestigungsvorrichtungen der Führungssäulen zur Giessform zu gewährleisten, sollte der Spitzenabschnitt des Hohlraums eine bestimmte Mindestgrösse nicht unterschreiten. Erfindungsgemäss bevorzugt weist der kalottenförmige Hohlraum eine Mindestlänge und Mindestbreite eines theoretischen Rechtecks im Bereich der ersten Seite der Aufspannplatte auf, welche der Mindestlänge und Mindestbreite einer auf der ersten Seite der Aufspannplatte befestigten kleinstzulässigen Giessform entspricht. Es sei aber darauf hingewiesen, dass der abgeflachte Spitzenabschnitt des kalottenförmigen Hohlraums nicht tatsächlich rechteckig sein muss, sondern beispielsweise auch kreisförmig oder ellipsenförmig mit einer der theoretischen Rechteckfläche entsprechenden Fläche sein kann.

Abhängig von der Grösse einer Druckgiessmaschine können Giessformen verschiedener Grössen eingesetzt werden. Hierbei sind die von der Druckgiessmaschine bereitgestellte Schliesskraft sowie die in der Giessform während des Giessvorgangs auftretende Formsprengkraft zu berücksichtigen. Um eine Verformung der Giessform während des Giessvorgangs zu verhindern, muss die Giessform eine definierte Mindestlänge und Mindestbreite aufweisen. Diese Masse sind von der Dimension der Druckgiessmaschine abhängig und können nicht allgemein angegeben werden. Üblicherweise weist das theoretische Rechteck des Spitzenabschnitts des kalottenförmigen Hohlraums im Bereich der ersten Seite der Aufspannplatte eine Fläche auf, welche im Bereich von 15-40%, vorzugsweise 20-35% der Gesamtfläche der ersten Seite der Aufspannplatte liegt.

Erfindungsgemäss kommt es zu einem kontinuierlichen Übergang von der Basis zum Spitzenabschnitt des kalottenförmigen Hohlraums. Mit anderen Worten weisen die Innenwände des kalottenförmigen Hohlraums keine Stufen oder andere diskontinuierliche Abschnitte auf. Insbesondere bevorzugt weisen alle Innenwandabschnitte des kalottenförmigen Hohlraums die gleiche Krümmung auf.

Erfindungsgemäss bevorzugt weist der kalottenförmige Hohlraum eine Tiefe auf, welche 50-80%, bevorzugter 55-75% der Gesamttiefe der Aufspannplatte beträgt.

Gemäss einer bevorzugten Ausführungsform der vorliegenden Erfindung handelt es sich um eine feste Aufspannplatte, bei welcher eine sich durch die Aufspannplatte erstreckende Giessöffnung zum Einleiten von Giessmaterial in die Giessform vorgesehen ist, wobei der kalottenförmige Hohlraum sich zur Giessöffnung hin verjüngt und wobei die Giessöffnung durch den Hohlraum zugänglich ist.

Neben der vorteilhaften Gewichtsreduktion, welche durch Bereitstellung des vorstehend beschriebenen kalottenförmigen Hohlraums erreicht wird, kommt im Fall der Ausführungsform einer festen Aufspannplatte noch der Vorteil hinzu, dass durch den vergleichsweise grossen kalottenförmigen Hohlraums die Zugänglichkeit einer in der festen Aufspannplatte vorhandenen Giessöffnung erhöht wird. Bei einer konventionellen festen Aufspannplatte einer Druckgiessmaschine ist um die Giessöffnung herum allenfalls eine geringfügig erweitere Öffnung vorgesehen. Im Fall grösser dimensionierter fester Aufspannplatten, wie sie für Druckgiessmaschine mit grosser Schliesskraft erforderlich sind, vergrössert sich auch die Tiefe (Dicke) der festen Aufspannplatte. Dadurch wird die Zugänglichkeit der Giessöffnung enorm erschwert, was ein Positionieren einer Giesseinheit in dieser Giessöffnung entsprechend erschwert.

Bei der erfindungsgemässen festen Aufspannplatte wird dieses Problem durch die Bereitstellung des vorstehend beschriebenen kalottenförmigen Hohlraums vorteilhaft gelöst. Die Kalottenform mit relativ grosser offener Basis und sich zur Giessöffnung hin verjüngender Form erlaubt ein einfaches und schnelles Positionieren einer Giesseinheit in der Giessöffnung.

Es wurde gefunden, dass der Kraftfluss durch die erfindungsgemässe Aufspannplatte, insbesondere durch bestimmte definierte Abschnitte der festen Aufspannplatte, verläuft. Wenn man diese Abschnitte verstärkt, kann eine erfindungsgemässe feste Aufspannplatte erhöhten Kräften standhalten, ohne dass hierfür die feste Aufspannplatte insgesamt vergrössert werden muss.

Erfindungsgemäss sind daher auf Abschnitten der zweiten Seite der festen Aufspannplatte zwischen den Aufnahmeöffnungen Verstärkungselemente, vorzugsweise Rippen angeordnet.

Diese Verstärkungselemente erstrecken sich vorzugsweise über den Teil der vorstehend beschriebenen Abschnitte, welche einer Seite der Basis des kalottenförmigen Hohlraums benachbart sind. Es genügt hierbei erfindungsgemäss bevorzugt, dass sich diese Verstärkungselemente über 40-60% des entsprechenden Abschnitts erstrecken.

Zusätzlich oder alternativ zu den vorstehend beschriebenen Verstärkungselementen sind in dem kalottenförmigen Hohlraum Verstärkungselemente, vorzugsweise Rippen angeordnet, welche sich von der Basis des Hohlraums zur Giessöffnung hin erstrecken. Mit anderen Worten laufen diese Verstärkungselemente kreuzförmig von der Basis des Hohlraums auf die Giessöffnung zu.

Beide Arten von Verstärkungselementen sind vorzugsweise aus demselben Material gefertigt wie die feste Aufspannplatte, um die erforderliche Verstärkung bereitzustellen. Erfindungsgemäss besonders bevorzugt werden diese Verstärkungselemente bei der Herstellung der festen Aufspannplatte bereitgestellt, vorzugsweise in einem Giessprozess in einer entsprechend angepassten Giessform. Die gesamte Aufspannplatte ist also einstückig.

Es hat sich gezeigt, dass durch andere Abschnitte der festen Aufspannplatte der vorliegenden Erfindung wenig oder überhaupt kein Kraftfluss erfolgt. Dies betrifft insbesondere Abschnitte zwischen den Seitenwänden der festen Aufspannplatte und den entsprechenden Wänden des kalottenförmigen Hohlraums, aber auch Abschnitte zwischen den Wänden des kalottenförmigen Hohlraums und Verstärkungselementen, welche sich von der Basis des Hohlraums zur Giessöffnung hin erstrecken. Es wurde gefunden, dass in diesen Abschnitten der festen Aufspannplatte Material entfernt werden kann, um eine zusätzliche Gewichtsreduktion zu erreichen.

Gemäss einer weiteren bevorzugten Ausführungsform der vorliegenden Erfindung sind daher in den Seitenwänden der festen Aufspannplatte Aussparungen vorhanden. Die exakte Grösse dieser Aussparungen kann in Abhängigkeit der gewünschten Schliesskraft und Lebensdauer der festen Aufspannplatte eingestellt werden. Es ist aber grundsätzlich möglich, ohne wesentlichen Einfluss auf die Robustheit der festen Aufspannplatte erhebliche Teile in den Seitenbereichen der festen Aufspannplatte ausgespart bereitzustellen, vorzugsweise in einem Giessprozess zur Herstellung der festen Aufspannplatte in einer entsprechend angepassten Giessform. Die Aussparungen in den jeweiligen Seitenwänden der festen Aufspannplatte können gleich gross oder unterschiedlich gross sein.

Gemäss einer weiteren bevorzugten Ausführungsform der vorliegenden Erfindung sind in der festen Aufspannplatte weitere Hohlräume vorhanden. Diese Hohlräume befinden sich vorzugsweise in Abschnitten zwischen den Wänden des kalottenförmigen Hohlraums und Verstärkungselementen, welche sich von der Basis des Hohlraums zum Flächenschwerpunkt der Aufnahmeöffnungen auf der ersten Seite bzw. zur Giessöffnung hin erstrecken.

Bei einer bevorzugten Ausführungsform der vorliegenden Erfindung mit den vorstehend beschriebenen Verstärkungselementen auf Abschnitten der zweiten Seite der festen Aufspannplatte zwischen den Aufnahmeöffnungen und/oder in dem kalottenförmigen Hohlraum können die vorstehend beschriebenen Aussparungen und Hohlräume zusätzlich vergrössert werden.

Gemäss einer besonders bevorzugten Ausführungsform der vorliegenden Erfindung sind in der festen Aufspannplatte die Aussparungen und weiteren Hohlräume derart angeordnet, dass Segmente der festen Aufspannplatte als Stützelemente ausgebildet sind, welche zwischen einer Wand des kalottenförmigen Hohlraums und einer entsprechenden Seitenwand der festen Aufspannplatte verlaufen.

Mit anderen Worten sind die Dimensionen der Aussparungen in den Seitenwänden der festen Aufspannplatte und die Dimensionen der weiteren Hohlräume ausserhalb des kalottenförmigen Hohlraums derart gewählt, dass sie Segmente der festen Aufspannplatte umgeben, welche somit als Stützelemente ausgebildet sind. Diese Ausführungsform ist in Bezug auf Gewichtsreduktion, Kraftfluss und Zugänglichkeit der Giessöffnung optimal ausgestaltet.

Die vorliegende Erfindung betrifft weiterhin eine Druckgiessmaschine, umfassend
- eine feste Aufspannplatte,
- eine bewegliche Aufspannplatte,
- Führungssäulen, welche sich durch Aufnahmeöffnungen in der festen Aufspannplatte und Aufnahmeöffnungen in der beweglichen Aufspannplatte erstrecken, sowie
- eine Giesseinheit, welche sich durch die Giessöffnung in der festen Aufspannplatte erstreckt.
**dadurch gekennzeichnet, dass** die feste Aufspannplatte eine Aufspannplatte wie vorstehend beschrieben ist.

Die erfindungsgemässe Druckgiessmaschine ist durch die Anwesenheit einer vorstehend beschriebenen erfindungsgemässen festen Aufspannplatte ausgezeichnet. Dadurch ist sie für sehr hohe Schliesskräfte ausgelegt; die erfindungsgemässe Druckgiessmaschine weist eine maximale Schliesskraft von mindestens 45000 kN, bevorzugt mindestens 50000 kN und besonders bevorzugt mindestens 60000 kN, bis vorzugsweise zu 120000 kN, bevorzugter bis zu 100000 kN und besonders bevorzugt bis zu 85000 kN auf.

Es handelt sich vorzugsweise um eine Zwei-Platten-Druckgiessmaschine, obwohl auch Drei-Platten-Druckgiessmaschinen mit der vorstehend beschriebenen erfindungsgemässen festen Aufspannplatte ausgestattet werden können.

Erfindungsgemäss sind Kaltkammer-Druckgiessmaschinen bevorzugt.

Gemäss einer bevorzugten Ausführungsform der vorliegenden Erfindung ist auch die bewegliche Aufspannplatte hinsichtlich ihres Gewichts und Kraftflusses optimiert. Zu diesem Zweck kann eine bewegliche Aufspannplatte verwendet werden, welche wie vorstehend beschrieben einen kalottenförmigen Hohlraum aufweist, dessen Basis sich in der zweiten Seite der beweglichen Aufspannplatte befindet und offen ist und welcher sich zum Flächenschwerpunkt der Aufnahmeöffnungen auf der ersten Seite der beweglichen Aufspannplatte hin verjüngt.

Vorzugsweise ist der in der beweglichen Aufspannplatte bereitgestellte kalottenförmige Hohlraum wie vorstehend in Bezug auf die feste Aufspannplatte beschrieben. Die entsprechenden vorstehenden Ausführungen treffen hier analog zu.

Im Spitzenabschnitt des kalottenförmigen Hohlraums in der beweglichen Aufspannplatte ist üblicherweise zumindest eine Öffnung für eine Ausstosseinheit vorgesehen. Die Ausstosseinheit dient zum Ausstossen eines fertigen Gussteils aus einer geöffneten Giessform. Auch hier ist die Zugänglichkeit der entsprechenden zumindest einen Öffnung erleichtert, weshalb bei einer erfindungsgemässen beweglichen Aufspannplatte vorteilhaft die Ausstosseinheit auf einfachere und schnellere Weise in der Öffnung innerhalb des Hohlraums der beweglichen Aufspannplatte positioniert werden kann.

Analog zur erfindungsgemässen festen Aufspannplatte wurde auch für die bewegliche Aufspannplatte der vorliegenden Erfindung gefunden, dass durch Abschnitte der beweglichen Aufspannplatte der vorliegenden Erfindung wenig oder überhaupt kein Kraftfluss erfolgt. Dies betrifft insbesondere Abschnitte zwischen den Seitenwänden der beweglichen Aufspannplatte und den entsprechenden Wänden des kalottenförmigen Hohlraums. Es wurde gefunden, dass in diesen Abschnitten der beweglichen Aufspannplatte Material entfernt werden kann, um eine zusätzliche Gewichtsreduktion zu erreichen.

Im Fall der erfindungsgemässen beweglichen Aufspannplatte können in den Seitenwänden nicht nur Aussparungen bereitgestellt werden, sondern sogar Öffnungen zum kalottenförmigen Hohlraum hin. Erfindungsgemäss bevorzugt sind in den Seitenwänden der beweglichen Aufspannplatte Seitenwandöffnungen und/oder in den Wänden des kalottenförmigen Hohlraums der beweglichen Aufspannplatte Kalottenwandöffnungen vorhanden. Besonders bevorzugt kommunizieren die jeweiligen Öffnungen miteinander.

Auch bei der beweglichen Aufspannplatte können Verstärkungselemente bereitgestellt sein, wie sie vorstehend für die feste Aufspannplatte beschrieben wurden. Die entsprechenden vorstehenden Ausführungen treffen hier analog zu.

Erfindungsgemäss bevorzugt sind Zwischenstege an der zweiten Seite der beweglichen Aufspannplatte zwischen den Aufnahmeöffnungen für die Führungssäulen vorgesehen, wobei die Breite der Zwischenstege 5 bis 30% des Abstands zweier benachbarten Zentren der Aufnahmeöffnungen entspricht und die Dicke der Zwischenstege 5 bis 30% des Abstands zweier benachbarten Zentren der Aufnahmeöffnungen entspricht. Diese Zwischenstege erlauben die Übernahme von hohen Dehnungskräften.

Die vorliegende Erfindung wird nachstehend näher unter Bezugnahme auf bevorzugte Ausführungsformen und nicht einschränkende Zeichnungen erläutert. Es zeigen:
- Fig. 1A: eine schematische Ansicht einer festen Aufspannplatte nicht gemäss der vorliegenden Erfindung
- Fig. 1B: eine Vorderansicht auf die erste Seite der festen Aufspannplatte gemäss Fig. 1A
- Fig. 1C: eine Seitenansicht der festen Aufspannplatte gemäss Fig. 1A
- Fig. 1D: eine Schnittansicht entlang der Linie C-C in Fig. 1C der festen Aufspannplatte gemäss Fig. 1A
- Fig. 1E: eine Schnittansicht entlang der Linie A-A in Fig. 1B der festen Aufspannplatte gemäss Fig. 1A
- Fig. 1F: eine Schnittansicht entlang der Linie B-B in Fig. 1B der festen Aufspannplatte gemäss Fig. 1A
- Fig. 2: eine schematische Ansicht einer festen Aufspannplatte gemäss einer Ausführungsform der vorliegenden Erfindung mit Verstärkungselementen
- Fig. 3A: eine schematische Ansicht einer Druckgiessmaschine gemäss einer weiteren Ausführungsform der vorliegenden Erfindung
- Fig. 3B: eine Seitenansicht der Druckgiessmaschine gemäss Fig. 3A
- Fig. 4a: eine schematische Ansicht einer beweglichen Aufspannplatte nicht gemäss der vorliegenden Erfindung
- Fig. 4B: eine Vorderansicht auf die zweite Seite der beweglichen Aufspannplatte gemäss Fig. 4A
- Fig. 4C: eine Schnittansicht entlang der Linie A-A in Fig. 4B der beweglichen Aufspannplatte gemäss Fig. 4A
- Fig. 4D: eine Schnittansicht entlang der Linie B-B in Fig. 4B der beweglichen Aufspannplatte gemäss Fig. 4A
- Fig. 4E: eine Schnittansicht entlang der Linie C-C in Fig. 4B der beweglichen Aufspannplatte gemäss Fig. 4A

Gleiche Bezugszeichen in verschiedenen Figuren bezeichnen dieselben Komponenten.

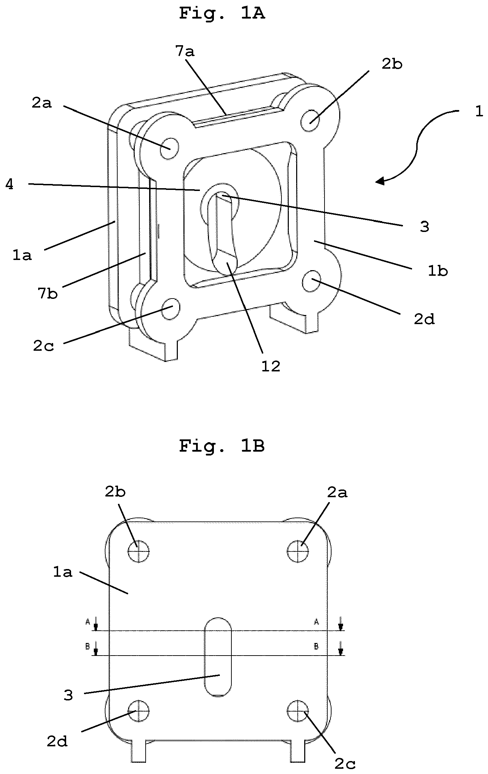

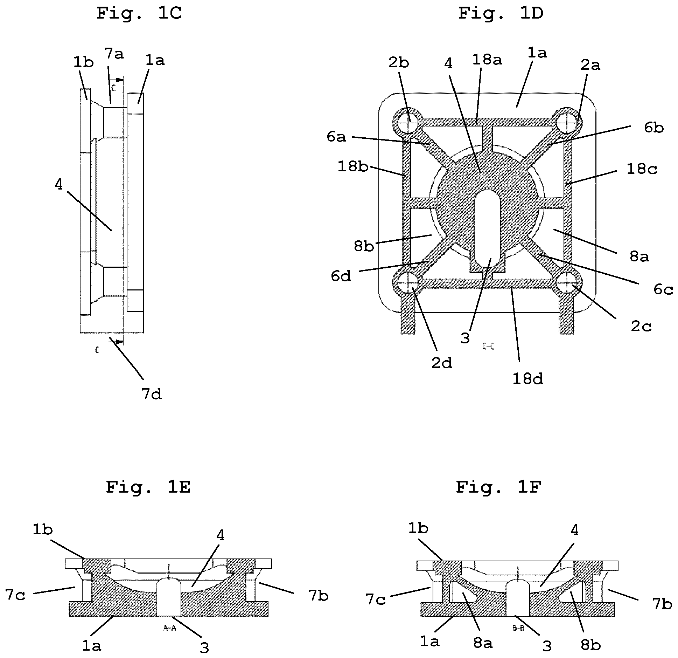

In den Figuren 1A bis 1F ist eine Ausführungsform einer festen Aufspannplatte 1 nicht gemäss der vorliegenden Erfindung gezeigt. Die Aufspannplatte 1 weist eine erste Seite 1a und eine zweite Seite 1b auf. Auf der ersten Seite 1a kann eine (hier nicht gezeigte) Giessform mittels (hier nicht dargestellter) Befestigungseinrichtungen angeordnet werden. In den Ecken der festen Aufspannplatte 1 befinden sich Aufnahmeöffnungen 2a, 2b, 2c, 2d für (hier nicht gezeigte) Führungssäulen. Die Aufnahmeöffnungen 2a, 2b, 2c, 2d erstrecken sich durch die gesamte feste Aufspannplatte 1.

In der festen Aufspannplatte 1 ist ein kalottenförmiger Hohlraum 4 angeordnet. Die Basis des kalottenförmigen Hohlraums 4 befindet sich in der zweiten Seite 1b der festen Aufspannplatte 1 und ist offen. Der kalottenförmige Hohlraum 4 verjüngt sich zu einem (hier kreisförmigen) Spitzenabschnitt hin, in welchem sich eine Giessöffnung 3 befindet. Wie in Fig. 1A dargestellt kann in der Giessöffnung 3 eine Giesseinheit 12 positioniert werden. Dies ist aufgrund der Kalottenform des Hohlraums 4 auf einfache Weise möglich, da dadurch die Giessöffnung 3 gut zugänglich ist. Weiterhin ist ersichtlich, dass in den Seitenwänden der festen Aufspannplatte 1 Aussparungen 7a, 7b, 7c, 7d vorhanden sind. In der festen Aufspannplatte 1 sind weitere Hohlräume 8a, 8b vorhanden, welche sich in Abschnitten zwischen den Wänden des kalottenförmigen Hohlraums 4 und Verstärkungselementen 6a, 6b, 6c, 6d, welche sich von der Basis des Hohlraums zur Giessöffnung hin erstrecken.

In der festen Aufspannplatte 1 sind die Aussparungen 7a, 7b, 7c, 7d und weiteren Hohlräume 8a, 8b derart angeordnet, dass Segmente der festen Aufspannplatte 1 als Stützelemente 18a, 18b, 18c, 18d ausgebildet sind, welche zwischen einer Wand des kalottenförmigen Hohlraums 4 und einer entsprechenden Seitenwand der festen Aufspannplatte 1 verlaufen.

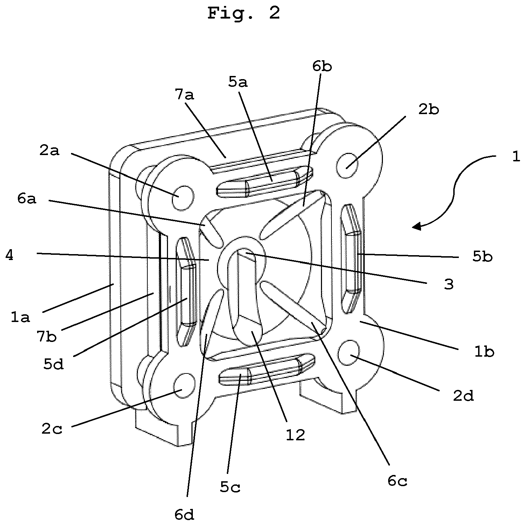

In Fig. 2 ist eine schematische Ansicht einer festen Aufspannplatte 1 gemäss einer Ausführungsform der vorliegenden Erfindung mit Verstärkungselementen 5a, 5b, 5c, 5d und 6a, 6b, 6c, 6d gezeigt. Auf Abschnitten der zweiten Seite 1b der festen Aufspannplatte 1 zwischen den Aufnahmeöffnungen 2a, 2b, 2c, 2d sind Verstärkungselemente 5a, 5b, 5c, 5d angeordnet. Vorzugsweise handelt es sich hierbei um Rippen.

Zusätzlich sind in dem kalottenförmigen Hohlraum 4 Verstärkungselemente 6a, 6b, 6c, 6d angeordnet. Vorzugsweise handelt es sich hierbei um Rippen. Diese Verstärkungselemente 6a, 6b, 6c, 6d erstrecken sich von der Basis des Hohlraums 4 zur Giessöffnung 3 hin, vorzugsweise wie in Fig. 2 gezeigt kreuzförmig bzw. entlang der Wand des kalottenförmigen Hohlraums 4.

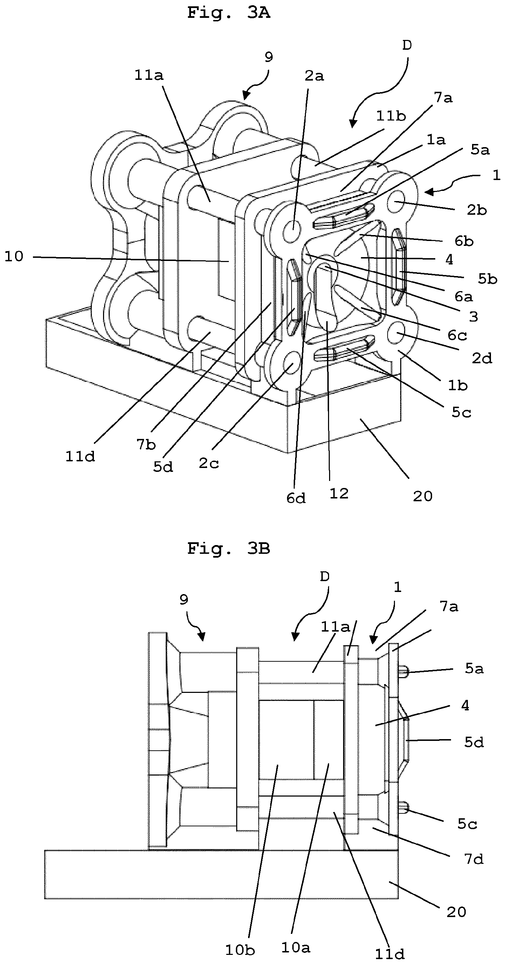

In Fig. 3A ist eine schematische Ansicht einer Druckgiessmaschine D gemäss einer weiteren Ausführungsform der vorliegenden Erfindung gezeigt. In Fig. 3B ist eine Seitenansicht der Druckgiessmaschine D gemäss Fig. 3A gezeigt.

Die Druckgiessmaschine D umfasst eine feste Aufspannplatte 1, welche hier eine feste Aufspannplatte 1 der Ausführungsform gemäss Fig. 2 ist. Die Druckgiessmaschine D umfasst weiterhin eine nachstehend näher erläuterte bewegliche Aufspannplatte 9. Die Aufspannplatten 1 und 9 sind auf einem Maschinenrahmen 20 angeordnet. Während die feste Aufspannplatte 1 fest mit dem Maschinenrahmen 20 verbunden ist, kann die bewegliche Aufspannplatte 9 auf bekannte Weise mittels eines (hier nicht gezeigten) Antriebs auf dem Maschinenrahmen 20 auf Führungssäulen 11a, 11b, 11c, 11d von einer Öffnungsposition in einer Schliessposition bewegt werden und umgekehrt. In den Fig. 3A und 3B befindet sich die bewegliche Aufspannplatte 9 in der Schliessposition. Die Führungssäulen 11a, 11b, 11c, 11d sind in Aufnahmeöffnungen 2a, 2b, 2c, 2d der festen Aufspannplatte 1 und in Aufnahmeöffnungen 13a, 13b, 13c, 13d der beweglichen Aufspannplatte 9 angeordnet. Zwischen den Aufspannplatten 1 und 9 befindet sich eine Giessform 10, welche hier aus zwei Giessformhälften 10a und 10b besteht.

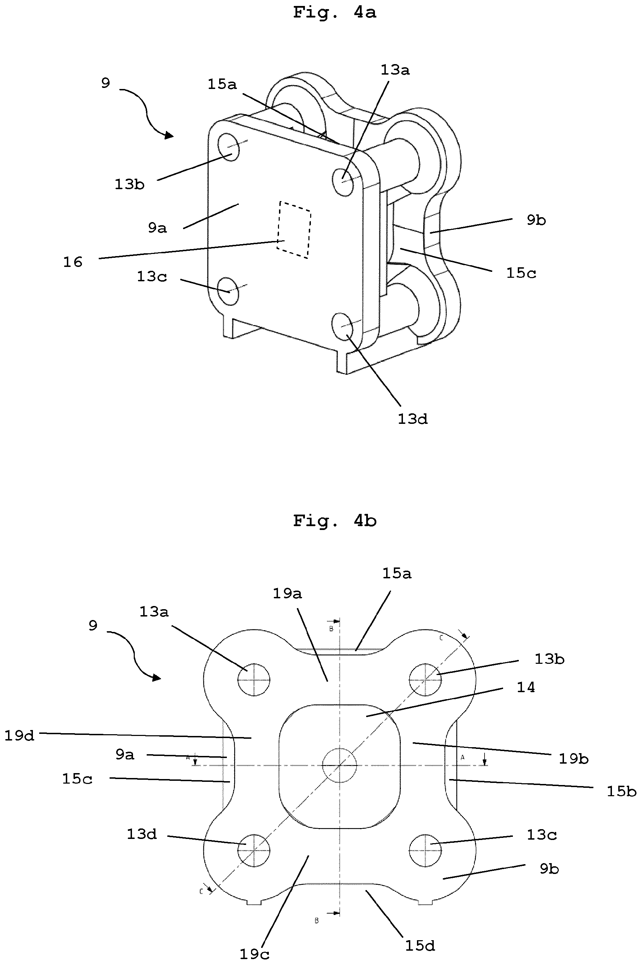

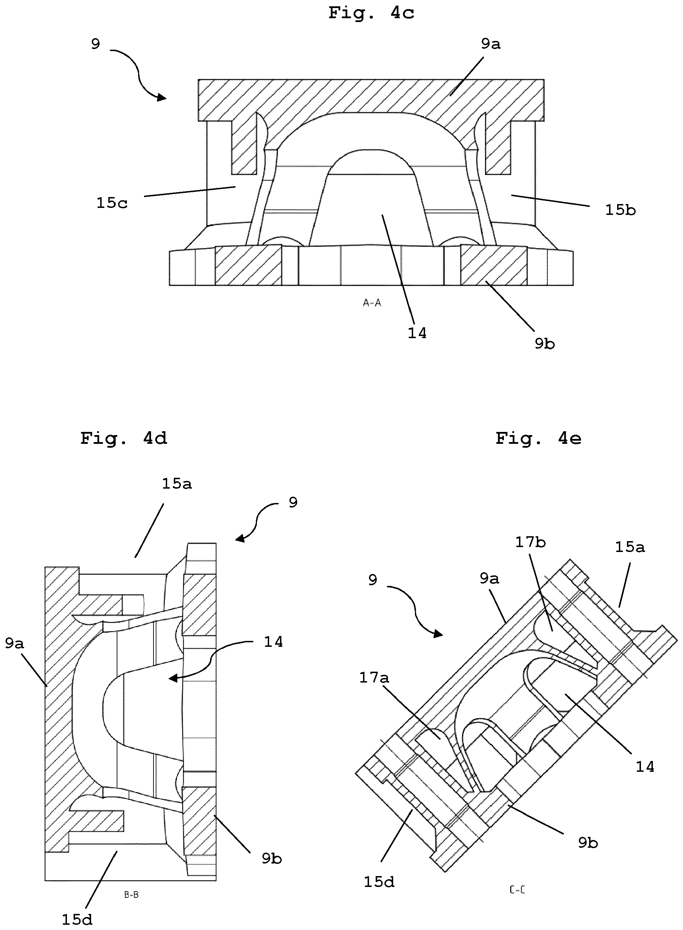

In den Figuren 4A bis 4E ist eine Ausführungsform einer beweglichen Aufspannplatte 9 nicht gemäss der vorliegenden Erfindung gezeigt.

Die Aufspannplatte 9 weist eine erste Seite 9a und eine zweite Seite 9b auf. Auf der ersten Seite 9a kann eine (hier nicht gezeigte) Giessform mittels (hier nicht dargestellter) Befestigungseinrichtungen angeordnet werden. In den Ecken der festen Aufspannplatte 9 befinden sich Aufnahmeöffnungen 13a, 13b, 13c, 13d für (hier nicht gezeigte) Führungssäulen. Die Aufnahmeöffnungen 13a, 13b, 13c, 13d erstrecken sich durch die gesamte bewegliche Aufspannplatte 9. Zwischen den Aufnahmeöffnungen 13a, 13b, 13c, 13d befinden sich Zwischenstege 19a, 19b, 19c, 19d. In der beweglichen Aufspannplatte 9 ist ein kalottenförmiger Hohlraum 14 angeordnet. Die Basis des kalottenförmigen Hohlraums 14 befindet sich in der zweiten Seite 9b der beweglichen Aufspannplatte 9 und ist offen. Der kalottenförmige Hohlraum 14 verjüngt sich zu einem (hier kreisförmigen) Spitzenabschnitt hin, in welchem sich eine Öffnung 16 für eine Ausstosseinheit (in Fig. 4A schematisch gestrichelt dargestellt) befindet. Es kann in der Öffnung 16 eine (hier nicht gezeigte) Ausstosseinheit positioniert werden. Dies ist aufgrund der Kalottenform des Hohlraums 14 auf einfache Weise möglich, da dadurch die Öffnung 16 gut zugänglich ist.

Weiterhin ist ersichtlich, dass in den Seitenwänden der beweglichen Aufspannplatte 9 Seitenwandöffnungen 15a, 15b, 15c, 15d vorhanden sind.

In der beweglichen Aufspannplatte 9 sind weiterhin in den Wänden des kalottenförmigen Hohlraums 14 Kalottenwandöffnungen 17a, 17b vorhanden. Die Öffnungen 15a, 15b, 15c, 15d und 17a, 17b kommunizieren miteinander, so dass sich eine durchgehende Öffnung in den kalottenförmigen Hohlraum 14 hin ergibt.

## Patentansprüche

1. Aufspannplatte (1, 9), insbesondere feste Aufspannplatte (1), für eine Druckgiessmaschine (D), umfassend
- eine erste Seite (1a, 9a) und eine zweite Seite (1b, 9b), wobei an der ersten Seite (1a, 9a) eine Giessform (10) angeordnet werden kann,
- Aufnahmeöffnungen (2a, 2b, 2c, 2d, 13a, 13b, 13c, 13d) für Führungssäulen, welche in den Ecken der Aufspannplatte (1, 9) angeordnet sind,
wobei die Aufspannplatte (1, 9) einen kalottenförmigen Hohlraum (4, 14) aufweist, dessen Basis sich in der zweiten Seite (1b, 9b) der Aufspannplatte (1, 9) befindet und offen ist und welcher sich zum Flächenschwerpunkt der Aufnahmeöffnungen (2a, 2b, 2c, 2d, 13a, 13b, 13c, 13d) auf der ersten Seite (1a, 9a) hin verjüngt, dass auf Abschnitten der zweiten Seite (1b) der insbesondere festen Aufspannplatte (1) zwischen den Aufnahmeöffnungen (2a, 2b, 2c, 2d) Verstärkungselemente (5a, 5b, 5c, 5d) angeordnet sind, vorzugsweise Rippen, und die Aufspannplatte für eine maximale Schliesskraft von mindestens 45000 kN, vorzugsweise bis zu 120000 kN ausgelegt ist.

2. Aufspannplatte nach Anspruch 1, wobei der kalottenförmige Hohlraum (4) eine Mindestlänge und Mindestbreite eines theoretischen Rechtecks im Bereich der ersten Seite (1a, 9a) aufweist, welche der Mindestlänge und Mindestbreite einer auf der ersten Seite (1a, 9a) der Aufspannplatte (1, 9) befestigten kleinstzulässigen Giessform (10) entspricht.

3. Aufspannplatte nach Anspruch 1 oder 2, wobei der Abstand vom Zentrum einer Aufnahmeöffnung (2a, 2b, 2c, 2d, 13a, 13b, 13c, 13d) zur nächstgelegenen vertikalen Innenseite des kalottenförmigen Hohlraums (4, 14) 5-30% des Abstands zwischen einer durch den Flächenschwerpunkt der Aufnahmeöffnungen (2a, 2b, 2c, 2d, 13a, 13b, 13c, 13d) verlaufende Mittellinie und dem Zentrum einer Aufnahmeöffnung (2a, 2b, 2c, 2d, 13a, 13b, 13c, 13d) beträgt.

4. Aufspannplatte nach einem der vorhergehenden Ansprüche, wobei der kalottenförmige Hohlraum (4, 14) eine Tiefe aufweist, welche 50-80% der Gesamttiefe der Aufspannplatte (1, 9) beträgt.

5. Aufspannplatte nach einem der vorhergehenden Ansprüche, wobei es sich um eine feste Aufspannplatte (1) handelt, bei welcher eine sich durch die Aufspannplatte (1) erstreckende Giessöffnung (3) zum Einleiten von Giessmaterial in die Giessform (10) vorgesehen ist, wobei der kalottenförmige Hohlraum (4) sich zur Giessöffnung (3) hin verjüngt und wobei die Giessöffnung (3) durch den Hohlraum (4) zugänglich ist.

6. Aufspannplatte nach Anspruch 5, wobei in dem kalottenförmigen Hohlraum (4) Verstärkungselemente (6a, 6b, 6c, 6d), vorzugsweise Rippen, angeordnet sind, welche sich von der Basis des Hohlraums (4) zum Flächenschwerpunkt der Aufnahmeöffnungen (2a, 2b, 2c, 2d, 13a, 13b, 13c, 13d) auf der ersten Seite (1a, 9a) bzw. zur Giessöffnung (3) hin erstrecken.

7. Aufspannplatte nach Anspruch 5 oder 6, wobei in den Seitenwänden der festen Aufspannplatte (1) Aussparungen (7a, 7b, 7c, 7d) vorhanden sind.

8. Aufspannplatte nach einem der Ansprüche 5 bis 7, wobei in der festen Aufspannplatte (1) weitere Hohlräume (8a, 8b) vorhanden sind.

9. Aufspannplatte nach Anspruch 8, wobei in der festen Aufspannplatte (1) die Aussparungen (7a, 7b, 7c, 7d) und weiteren Hohlräume (8a, 8b) derart angeordnet sind, dass Segmente der festen Aufspannplatte (1) als Stützelemente (18a, 18b, 18c, 18d) ausgebildet sind, welche zwischen einer Wand des kalottenförmigen Hohlraums (4) und einer entsprechenden Seitenwand der festen Aufspannplatte (1) verlaufen.

10. Druckgiessmaschine (D), umfassend
- eine feste Aufspannplatte (1),
- eine bewegliche Aufspannplatte (9),
- Führungssäulen (11a, 11b, 11c, 11d), welche sich durch Aufnahmeöffnungen (2a, 2b, 2c, 2d) in der festen Aufspannplatte (1) und Aufnahmeöffnungen (13a, 13b, 13c, 13d) in der beweglichen Aufspannplatte (9) erstrecken, sowie
- eine Giesseinheit (12), welche sich durch die Giessöffnung (3) in der festen Aufspannplatte (1) erstreckt.
wobei die feste Aufspannplatte (1) eine Aufspannplatte gemäss einem der Ansprüche 1 bis 9 ist und die Druckgiessmaschine eine maximale Schliesskraft von mindestens 45000 kN, vorzugsweise bis zu 120000 kN aufweist.

11. Druckgiessmaschine nach Anspruch 10, wobei die bewegliche Aufspannplatte (9) eine Aufspannplatte gemäss einem der Ansprüche 1 bis 4 ist.

12. Druckgiessmaschine nach einem der Ansprüche 10 oder 11, wobei in den Seitenwänden der beweglichen Aufspannplatte (9) Seitenwandöffnungen (15a, 15b, 15c, 15d) und/oder in den Wänden des kalottenförmigen Hohlraum (14) der beweglichen Aufspannplatte (9) Kalottenwandöffnungen (17a, 17b) vorhanden sind.

13. Druckgiessmaschine nach einem der Ansprüche 10 bis 12, wobei Zwischenstege (19a, 19b, 19c, 19d) an der zweiten Seite (9b) der beweglichen Aufspannplatte (9) zwischen den Aufnahmeöffnungen (13a, 13b, 13c, 13d) für die Führungssäulen (11a, 11b, 11c, 11d) vorgesehen sind, wobei die Breite der Zwischenstege (19a, 19b, 19c, 19d) 5 bis 30% des Abstands zweier benachbarten Zentren der Aufnahmeöffnungen (13a, 13b, 13c, 13d) entspricht und die Dicke der Zwischenstege (19a, 19b, 19c, 19d) 5 bis 30% des Abstands zweier benachbarten Zentren der Aufnahmeöffnungen (13a, 13b, 13c, 13d) entspricht.

14. Druckgiessmaschine nach einem der Ansprüche 10 bis 13, wobei es sich um eine Zweiplatten-Druckgiessmaschine handelt.

## Claims

1. Clamping plate (1, 9), in particular fixed clamping plate (1), for a die casting machine (D), comprising
- a first side (1a, 9a) and a second side (1b, 9b), wherein a casting mold (10) can be arranged on the first side (1a, 9a),
- accommodation openings (2a, 2b, 2c, 2d, 13a, 13b, 13c, 13d) for tie bars, which are arranged in the corners of the clamping plate (1, 9),
wherein the clamping plate (1, 9) has a dome-shaped cavity (4, 14), the base of which is located in the second side (1b, 9b) of the clamping plate (1, 9) and is open and which tapers towards the center of gravity of the accommodation openings (2a, 2b, 2c, 2d, 13a, 13b, 13c, 13d) on the first side (1a, 9a), reinforcing elements (5a, 5b, 5c, 5d), preferably ribs, are arranged on sections of the second side (1b) of in particular the fixed clamping plate (1) between the accommodation openings (2a, 2b, 2c, 2d), and the clamping plate is designed for a maximum closing force of at least 45,000 kN, preferably up to 120,000 kN.

2. Clamping plate according to claim 1, wherein the dome-shaped cavity (4) has a minimum length and minimum width of a theoretical rectangle in the region of the first side (1a, 9a), which corresponds to the minimum length and minimum width of a smallest permissible casting mold (10) fastened on the first side (1a, 9a) of the clamping plate (1, 9) .

3. Clamping plate according to claim 1 or 2, wherein the distance from the center of an accommodation opening (2a, 2b, 2c, 2d, 13a, 13b, 13c, 13d) to the nearest vertical inner side of the dome-shaped cavity (4, 14) is 5-30% of the distance between a center line running through the center of gravity of the accommodation openings (2a, 2b, 2c, 2d, 13a, 13b, 13c, 13d) and the center of an accommodation opening (2a, 2b, 2c, 2d, 13a, 13b, 13c, 13d).

4. Clamping plate according to one of the preceding claims,
wherein the dome-shaped cavity (4, 14) has a depth which is 50-80% of the total depth of the clamping plate (1, 9).

5. Clamping plate according to one of the preceding claims,
wherein the plate is a fixed clamping plate (1), in which a casting opening (3) extending through the clamping plate (1) is provided for introducing casting material into the casting mold (10), wherein the dome-shaped cavity (4) tapers towards the casting opening (3) and wherein the casting opening (3) is accessible through the cavity (4).

6. Clamping plate according to claim 5, wherein reinforcing elements (6a, 6b, 6c, 6d), preferably ribs, are arranged in the dome-shaped cavity (4), and extend from the base of the cavity (4) to the center of gravity of the accommodation openings (2a, 2b, 2c, 2d, 13a, 13b, 13c, 13d) on the first side (1a, 9a) or towards the casting opening (3).

7. Clamping plate according to claim 5 or 6, wherein recesses (7a, 7b, 7c, 7d) are provided in the side walls of the fixed clamping plate (1).

8. Clamping plate according to one of claims 5 to 7, wherein further cavities (8a, 8b) are present in the fixed clamping plate (1).

9. Clamping plate according to claim 8, wherein the recesses (7a, 7b, 7c, 7d) and further cavities (8a, 8b) are arranged in the fixed clamping plate (1) in such a way that segments of the fixed clamping plate (1) are designed as supporting elements (18a, 18b, 18c, 18d) which extend between a wall of the dome-shaped cavity (4) and a corresponding side wall of the fixed clamping plate (1).

10. Die casting machine (D), comprising
- a fixed clamping plate (1),
- a movable clamping plate (9),
- tie bars (11a, 11b, 11c, 11d) which extend through accommodation openings (2a, 2b, 2c, 2d) in the fixed clamping plate (1) and accommodation openings (13a, 13b, 13c, 13d) in the movable clamping plate (9), and
- a casting unit (12) which extends through the casting opening (3) in the fixed clamping plate (1).
wherein the fixed clamping plate (1) is a clamping plate according to one of claims 1 to 9 and the die casting machine has a maximum closing force of at least 45,000 kN, preferably up to 120,000 kN.

11. Die casting machine according to claim 10, wherein the movable clamping plate (9) is a clamping plate according to one of claims 1 to 4.

12. Die casting machine according to one of claims 10 or 11,
wherein side wall openings (15a, 15b, 15c, 15d) are provided in the side walls of the movable clamping plate (9) and/or dome-shaped wall openings (17a, 17b) are provided in the walls of the dome-shaped cavity (14) of the movable clamping plate (9).

13. Die casting machine according to one of claims 10 to 12, wherein intermediate racks (19a, 19b, 19c, 19d) are provided on the second side (9b) of the movable clamping plate (9) between the accommodation openings (13a, 13b, 13c, 13d) for the tie bars (11a, 11b, 11c, 11d), wherein the width of the intermediate racks (19a, 19b, 19c, 19d) corresponds to 5 to 30% of the distance between two adjacent centers of the accommodation openings (13a, 13b, 13c, 13d) and the thickness of the intermediate racks (19a, 19b, 19c, 19d) corresponds to 5 to 30% of the distance between two adjacent centers of the accommodation openings (13a, 13b, 13c, 13d) .

14. The die casting machine according to any one of claims 10 to 13, wherein the machine is a two-platen die casting machine.

## Revendications

1. Plaque de serrage (1, 9), en particulier plaque de serrage fixe (1), pour une machine de moulage sous pression (D), comprenant
- un premier côté (1a, 9a) et un deuxième côté (1b, 9b), une forme coulée (10) pouvant être disposé sur le premier côté (1a, 9a),
- des ouvertures de réception (2a, 2b, 2c, 2d, 13a, 13b, 13c, 13d) pour des barres de liaison, qui sont disposées dans les coins de la plaque de serrage (1, 9),
le plaque de serrage (1, 9) présentant une cavité (4, 14) en forme de calotte dont la base se trouve dans le deuxième côté (1b, 9b) du plaque de serrage (1, 9) et est ouverte et qui se rétrécit vers le centre de gravité de surface des ouvertures de réception (2a, 2b, 2c, 2d, 13a, 13b, 13c, 13d) sur le premier côté (1a, 9a), en ce que des éléments de renforcement (5a, 5b, 5c, 5d), de préférence des nervures, sont disposés sur des sections du deuxième côté (1b) du plaque de serrage (1), en particulier du plaque de serrage fixe, entre les ouvertures de réception (2a, 2b, 2c, 2d), et le plaque de serrage est conçu pour une force de fermeture maximale d'au moins 45000 kN, de préférence jusqu'à 120000 kN.

2. Plaque de serrage selon la revendication 1, dans lequel la cavité en forme de calotte (4) présente une longueur minimale et une largeur minimale d'un rectangle théorique dans la zone du premier côté (1a, 9a), qui correspondent à la longueur minimale et à la largeur minimale d'un forme coulée (10) de taille minimale admissible fixé sur le premier côté (1a, 9a) de la plaque de serrage (1, 9).

3. Plaque de serrage selon la revendication 1 ou 2, dans laquelle la distance entre le centre d'une ouverture de réception (2a, 2b, 2c, 2d, 13a, 13b, 13c, 13d) et la face intérieure verticale la plus proche de la cavité en forme de calotte (4, 14) est de 5 à 30 % de la distance entre une ligne médiane passant par le centre de gravité de la surface des ouvertures de réception (2a, 2b, 2c, 2d, 13a, 13b, 13c, 13d) et le centre d'une ouverture de réception (2a, 2b, 2c, 2d, 13a, 13b, 13c, 13d).

4. Plaque de serrage selon l'une quelconque des revendications précédentes, dans lequel la cavité en forme de calotte (4, 14) présente une profondeur qui représente 50 à 80% de la profondeur totale de la plaque de serrage (1, 9).

5. Plaque de serrage selon l'une des revendications précédentes, dans lequel il s'agit d'une plaque de serrage fixe (1), dans lequel une ouverture de coulée (3) s'étendant à travers la plaque de serrage (1) est prévue pour l'introduction de matériau de coulée dans le forme coulée (10), dans lequel la cavité (4) en forme de calotte se rétrécit vers l'ouverture de coulée (3) et dans lequel l'ouverture de coulée (3) est accessible à travers la cavité (4).

6. Plaque de serrage selon la revendication 5, dans lequel des éléments de renforcement (6a, 6b, 6c, 6d), de préférence des nervures, sont disposés dans la cavité en forme de calotte (4), lesquels s'étendent de la base de la cavité (4) vers le centre de gravité de la surface des ouvertures de réception (2a, 2b, 2c, 2d, 13a, 13b, 13c, 13d) sur le premier côté (1a, 9a) ou vers l'ouverture de coulée (3).

7. Plaque de serrage selon la revendication 5 ou 6, dans lequel des évidements (7a, 7b, 7c, 7d) sont prévus dans les parois latérales de la plaque de serrage fixe (1).

8. Plaque de serrage selon l'une quelconque des revendications 5 à 7, dans lequel d'autres cavités (8a, 8b) sont présentes dans la plaque de serrage fixe (1).

9. Plaque de serrage selon la revendication 8, dans lequel les évidements (7a, 7b, 7c, 7d) et autres cavités (8a, 8b) sont disposés dans la plaque de serrage fixe (1) de telle sorte que des segments du plaque de serrage fixe (1) sont réalisés sous la forme d'éléments de support (18a, 18b, 18c, 18d) qui s'étendent entre une paroi de la cavité en forme de calotte (4) et une paroi latérale correspondante de la plaque de serrage fixe (1).

10. Machine de moulage sous pression (D), comprenant
- une plaque de serrage fixe (1),
- une plaque de serrage mobile (9),
- des barres de liaison (11a, 11b, 11c, 11d) s'étendant à travers des ouvertures de réception (2a, 2b, 2c, 2d) dans la plaque de serrage fixe (1) et des ouvertures de réception (13a, 13b, 13c, 13d) dans la plaque de serrage mobile (9), et
- une unité de coulée (12) qui s'étend à travers l'ouverture de coulée (3) dans la plaque de fixation fixe (1).
la plaque de serrage fixe (1) étant une plaque de serrage selon l'une des revendications 1 à 9 et la machine de moulage sous pression présentant une force de fermeture maximale d'au moins 45000 kN, de préférence jusqu'à 120000 kN.

11. Machine de moulage sous pression selon la revendication 10, dans laquelle la plaque de serrage mobile (9) est une plaque de serrage selon l'une des revendications 1 à 4.

12. Machine de moulage sous pression selon l'une des revendications 10 ou 11, dans laquelle des ouvertures de paroi latérale (15a, 15b, 15c, 15d) sont présentes dans les parois latérales de la plaque de serrage mobile (9) et/ou des ouvertures de paroi de calotte (17a, 17b) sont présentes dans les parois de la cavité en forme de calotte (14) de la plaque de serrage mobile (9).

13. Machine de moulage sous pression selon l'une des revendications 10 à 12, dans laquelle des entretoises intermédiaires (19a, 19b, 19c, 19d) sont prévues sur le deuxième côté (9b) de la plaque de serrage mobile (9) entre les ouvertures de réception (13a, 13b, 13c, 13d) pour les barres de liaison (11a, 11b, 11c, 11d), la largeur des entretoises intermédiaires (19a, 19b, 19c, 19d) correspond à 5 à 30% de la distance entre deux centres voisins des ouvertures de réception (13a, 13b, 13c, 13d) et l'épaisseur des entretoises intermédiaires (19a, 19b, 19c, 19d) correspond à 5 à 30% de la distance entre deux centres voisins des ouvertures de réception (13a, 13b, 13c, 13d).

14. Machine de moulage sous pression selon l'une quelconque des revendications 10 à 13, dans laquelle il s'agit d'une machine de moulage sous pression à deux plaques.
